# EUROPÄISCHE PATENTSCHRIFT

(11) **EP 1 747 101 B1**
(45) Veröffentlichungstag und Bekanntmachung des Hinweises auf die Patenterteilung: **08.08.2012**
(21) Anmeldenummer: 05741194.4
(22) Anmeldetag: 09.05.2005
(51) Int. Cl.: B32B 27/08, B42D 15/10

(54) **MEHRLAGIG AUSGEBILDETER TRAGBARER DATENTRÄGER**
MULTILAYERED PORTABLE DATA CARRIER
SUPPORT DE DONNEES A STRUCTURE MULTICOUCHE

(30) Priorität: 11.05.2004 DE 102004023310
(43) Veröffentlichungstag der Anmeldung: 31.01.2007
(73) Patentinhaber: Giesecke & Devrient GmbH, 81677 München (DE)
(72) Erfinder: RIEDL, Josef, 85395 Attenkirchen (DE)
(86) Internationale Anmeldenummer: PCT/EP2005/005010
(87) Internationale Veröffentlichungsnummer: WO 2005/110773

(56) Entgegenhaltungen:
- EP-A- 0 138 194
- EP-A- 0 430 282
- EP-A- 0 548 858
- US-A- 5 928 788

## Beschreibung

Die Erfindung betrifft einen mehrlagig ausgebildeten tragbaren Datenträger. Weiterhin betrifft die Erfindung ein Halbzeug und ein Verfahren zur Herstellung eines mehrlagig ausgebildeten tragbaren Datenträgers.

Tragbare Datenträger werden in den unterschiedlichsten Ausführungsformen für eine Vielzahl von Anwendungen eingesetzt. Dabei weisen die tragbaren Datenträger häufig eine Beschriftung, eingearbeitete Sicherheitsmerkmale einen Magnetstreifen und/oder einen integrierten Schaltkreis auf. Insbesondere können die tragbaren Datenträger als Kunststoffkarten mit genormten Abmessungen ausgebildet sein und beispielsweise zur Durchführung von Transaktionen des bargeldlosen Zahlungsverkehrs oder zum Nachweis einer Zugangsberechtigung zu einem Mobilfunknetz usw. eingesetzt werden. Ebenso sind auch tragbare Datenträger bekannt, die in der Regel jeweils dünner und großformatiger als die genormten Kunststoffkarten ausgebildet sind und als eine Seite in ein Passbuch integriert sind.

Angesichts der weiten Verbreitung von tragbaren Datenträgern spielt neben den Herstellungskosten auch die Umweltverträglichkeit der eingesetzten Materialien eine zunehmend größere Rolle. Dabei muss in den meisten Anwendungsfällen weiterhin eine lange Lebensdauer der tragbaren Datenträger gewährleistet sein. Außerdem werden die tragbaren Datenträger in zunehmendem Maß mit Beschriftungen und Zusatzelementen versehen, wobei gleichzeitig die daran geknüpften Qualitätsanforderungen steigen.

Ein bekanntes Verfahren zur Herstellung von tragbaren Datenträgern hoher Qualität stellt die Lamination aus mehreren Kunststofffolien dar. Allerdings ist die Herstellung komplex aufgebauter tragbarer Datenträger aus vielen Einzelfolien aufwendig und bezüglich der Materialauswahl insbesondere benachbarter Einzelfolien stark eingeschränkt. Zudem müssen die Einzelfolien eine gewisse Mindestdicke aufweisen, um eine Handhabung zu ermöglichen. Es wurde daher bereits dazu übergegangen, für die Herstellung von tragbaren Datenträgern coextrudierte Folien zu verwenden, die aus mehreren Schichten bestehen. Die einzelnen Schichten werden während ihrer Herstellung zu einer mehrschichtigen Folie verbunden. Mehrere dieser mehrschichtigen Folien können dann durch Lamination miteinander verbunden werden.

Eine derartige Vorgehensweise ist beispielsweise aus der EP 0 640 940 A2 bekannt. Dort ist eine kontaktlose Chipkarte offenbart, die eine zwischen zwei Deckfolien angeordnete Kernfolie aufweist. Die Deckfolien sind jeweils mittels einer Verbindungsschicht mit der Kernfolie verbunden. Die Verbindungsschicht ist jeweils insbesondere als eine mit den Deckfolien und/oder mit der Kernfolie coextrudierte Schicht ausgebildet. Die Deckfolien und die Kernfolie bestehen beispielsweise aus Polycarbonat. Die Verbindungsschichten können aus einem als PETG bezeichneten modifizierten Polyester bestehen.

Aus der US 5,928,788 ist unter anderem ein mehrlagiger Datenträger bekannt, der durch Lamination einer Kernfolie und zweier Deckfolien hergestellt wird. Die Kernfolie und die Deckfolien bestehen insbesondere aus PETG. Um ein allzu starkes Anhaften an den Platten der Laminierpresse zu verhindern, werden die Deckfolien im Außenbereich mit Antiblocking-Substanzen angereichert. Hierzu werden die Deckfolien jeweils aus zwei Schichten coextrudiert, wobei nur eine dieser Schichten die Antiblocking-Substanzen enthält.

Die WO 02/41245 A2 offenbart einen multifunktionellen Kartenkörper, der aus mehreren durch Lamination miteinander verbundenen Folien gebildet ist, wobei wenigsten eine Folie aus wenigstens zwei Coextrusionsschichten besteht. Insbesondere ist vorgesehen, eine Kernfolie beidseits mit je einer Deckfolie zu verbinden. Die Deckfolien können jeweils als eine coextrudierte Polycarbonatfolie mit zwei oder drei Coextrusionsschichten ausgebildet sein. Die Kernfolie kann zwei unterschiedliche Arten von Coextrusionsschichten aufweisen. Die beiden Arten von Coextrusionsschichten folgen alternierend aufeinander, wobei ein Schichtaufbau aus drei oder fünf alternierenden Coextrusionsschichten ausgebildet wird. Die eine Art von Coextrusionsschicht kann aus Polycarbonat oder Polyethylenterephtalat (PET) bestehen. Die andere Art von Coextrusionsschicht kann aus einem thermoplastischen Elastomer bestehen. WO 02/41 245 zeigt auch den Stand der Technik.

Der Erfindung liegt die Aufgabe zugrunde, einen tragbaren Datenträger mit einem möglichst geringen Aufwand qualitativ hochwertig auszubilden.

Diese Aufgabe wird durch einen mehrlagig ausgebildeten tragbaren Datenträger mit der Merkmalskombination des Anspruchs 1 gelöst.

Der erfindungsgemäße Datenträger hat den Vorteil, dass er sehr hohen Qualitätsanforderungen genügt. Dies ist insbesondere durch die Verwendung einer coextrudierten Kernfolie möglich. Durch die Coextrusion können auch sehr unterschiedlich ausgebildete Schichten miteinander verbunden werden und es lassen sich sehr dünne Schichten herstellen. Die Herstellung des Datenträgers ist angesichts der wenigen und relativ dicken Einzelfolien dennoch mit einem vergleichsweise geringen Aufwand verbunden. Die drei unterschiedlichen Schichten der Kernfolie ermöglichen es, auch schwer miteinander vereinbare Anforderungen zu erfüllen. So weist die Kernfolie gute Laminationseigenschaften und gute Laserungseigenschaften auf und verfügt zudem über eine gewisse Elastizität und eine ausreichende Temperaturstabilität.

Die erste Schicht der Kernfolie weist, nach der Erfindung, eine Erweichungstemperatur unterhalb der Laminationstemperatur auf. Dadurch ist sichergestellt, dass bei der Lamination eine innige Verbindung zwischen der Kernfolie und der Deckfolie ausgebildet wird. Der Anteil der ersten Schicht an der Dicke der Kernfolie beträgt 2,5 % bis 15 %" vorzugsweise 2,5 % bis 10%, so dass noch ausreichend latz für die weiteren Schichten verbleibt. Nach der Erfindung ist die erste Schicht der Kernfolie auf Basis eines Co-Polyesters ausgebildet.

Der Anteil der zweiten Schicht an der Dicke der Kernfolie beträgt insbesondere 10 % bis 30 %. Dies ist ausreichend, um gute Bedingungen für die Laserung zu schaffen, Die zweite Schicht der Kernfolie kann auf Basis eines Polycarbonats und/oder eines Co-Polyesters ausgebildet sein. Bei einer gemischten Ausbildung (Blend) der zweiten Schicht der Kernfolie kann der Gewichtsanteil des Co-Polyesters 5 % bis 50 % betragen. Mit der vorstehend genannten Zusammensetzung lässt sich eine gute Temperaturstabilität erreichen, so dass bei der Laserung in der Regel keine thermisch bedingten Probleme entstehen.

Der Anteil der dritten Schicht an der Dicke der Kernfolie beträgt vorzugsweise 20 % bis 75 %. Die dritte Schicht kann somit relativ dick ausgebildet werden, so dass ihre mechanischen Eigenschaften in einem nennenswerten Umfang das mechanische Verhalten der Kernfolie bestimmen. Die dritte Schicht der Kernfolie kann auf Basis eines Co-Polyesters ausgebildet sein. Besonders vorteilhaft ist es, wenn die dritte Schicht der Kernfolie einen Schlagzähmodifier, insbesondere mit einem Gewichtsanteil von 5 % bis 25 %, aufweist. Dadurch wird die dritte Schicht etwas weicher und elastischer und die Kernfolie insgesamt mechanisch belastbarer. Weiterhin kann die dritte Schicht der Kernfolie Titanoxid, insbesondere mit einem Gewichtsanteil von 7 % bis 15 %, aufweisen. Der erfindungsgemäße Datenträger ist in der Regel so ausgebildet, dass die erste Schicht und die zweite Schicht der Kernfolie transparent sind und die dritte Schicht der Kernfolie opak ist.

In einer Weiterbildung des erfindungsgemäßen Datenträgers weist die Kernfolie eine vierte Schicht und/ oder eine fünfte Schicht auf, wobei die vierte Schicht entsprechend der zweiten Schicht und die fünfte Schicht entsprechend der ersten Schicht ausgebildet sind. Auf diese Weise lässt sich ein symmetrischer Aufbau der Kernfolie realisieren und dadurch die Gefahr einer Aufwölbung der Kernfolie gering halten.

Der erfindungsgemäße Datenträger kann beispielsweise als eine Seite eines Passbuches ausgebildet sein. In diesem Fall beträgt die Dicke der Kernfolie vorzugsweise 150 µm bis 200 µm.

Ebenso ist es auch möglich, den erfindungsgemäßen Datenträger als eine Kunststoffkarte, insbesondere als eine Magnetstreifenkarte oder eine Chipkarte, auszubilden. Dann beträgt die Dicke der Kernfolie 150 µm bis 350 µm, vorzugsweise etwa 300 µm.

Die Deckfolie weist vorzugsweise wenigstens zwei coextrudierte Schichten auf. Dadurch ist auch für die Deckfolie ein großer Bereich an Materialparametern und an Schichtdicken verfügbar. Besonders günstig ist eine Schichtdickenverteilung, bei welcher der Anteil der ersten Schicht an der Dicke der Deckfolie 2,5 % bis 25 % beträgt. Für die zweite Schicht beträgt der Anteil an der Dicke der Deckfolie vorzugsweise 50 % bis 95 %. Die gesamte Dicke der Deckfolie beträgt in der Regel etwa 100 µm. Die erste Schicht der Deckfolie kann auf Basis eines Co-Polyesters ausgebildet sein. Damit lassen sich gute Laminationseigenschaften erzielen. Im Hinblick auf die zweite Schicht der Deckfolie ist es vorteilhaft, wenn diese auf Basis eines Co-Polyesters und eines kristallinen, teilkristallinen oder mikrokristallinen Polyesters und/oder eines Polycarbonats ausgebildet ist. Der Gewichtsanteil des kristallinen, teilkristallinen oder mikrokristallinen Polyesters und/oder des Polycarbonats an der zweiten Schicht der Deckfolie kann insgesamt 50 % bis 95 % betragen. Besonders günstig ist ein Wert von 70 %. Diese Zusammensetzung verleiht der zweiten Schicht der Deckfolie eine hohe mechanische und thermische Stabilität.

Bei einer Abwandlung des erfindungsgemäßen Datenträgers weist die Deckfolie eine dritte Schicht auf, die entsprechend der ersten Schicht ausgebildet ist. Bei dieser Abwandlung ist die zweite Schicht zwischen der ersten Schicht und der dritten Schicht angeordnet.

Besonders vorteilhaft ist es, wenn in der Kernfolie und/oder der Deckfolie als Co-Polyester ein amorphes, glykolisiertes Polyethylenterephtalat eingesetzt wird. Dieses Material zeichnet sich durch seine günstigen Materialeigenschaften, eine gute Umweltverträglichkeit und einen akzeptablen Preis aus.

Das erfindungsgemäße Halbzeug zur Herstellung eines mehrlagig ausgebildeten tragbaren Datenträgers weist drei jeweils im Hinblick auf ihre Dicke und/ oder ihre Materialzusammensetzung unterschiedlich ausgebildete coextrudierte Schichten auf. Die Besonderheit des erfindungsgemäßen Halbzeugs besteht darin, dass eine der Schichten auf Basis eines Co-Polyesters ausgebildet ist und einen Schlagzähmodifier enthält.

Die Erfindung bezieht sich weiterhin auf ein Verfahren zur Herstellung eines mehrlagig ausgebildeten tragbaren Datenträgers. Beim erfindungsgemäßen Verfahren werden eine Kernfolie und wenigstens eine Deckfolie, die wenigstens zum Teil aus einem Co-Polyester und/oder einem kristallinen, teilkristallinen oder mikrokristallinen Polyester und/ oder einem Polycarbonat besteht, durch Lamination miteinander verbunden. Die Besonderheit des erfindungsgemäßen Verfahrens besteht darin, dass die Kernfolie durch Coextrusion wenigstens dreier jeweils im Hinblick auf ihre Dicke und/oder ihre Materialzusammensetzung unterschiedlich ausgebildeter Schichten erzeugt wird.

Die Erfindung wird nachstehend anhand der in der Zeichnung dargestellten Ausführungsbeispiele erläutert.

Es zeigen:
Fig.1 ein Ausführungsbeispiel für einen Folienstapel zur Herstellung einer Seite eines Passbuches in schematischer Darstellung,
Fig. 2 ein weiteres Ausführungsbeispiel für einen Folienstapel zur Herstellung einer Seite eines Passbuches in schematischer Darstellung und
Fig. 3 ein Ausführungsbeispiel für einen Folienstapel zur Herstellung einer Kunststoffkarte in schematischer Darstellung.

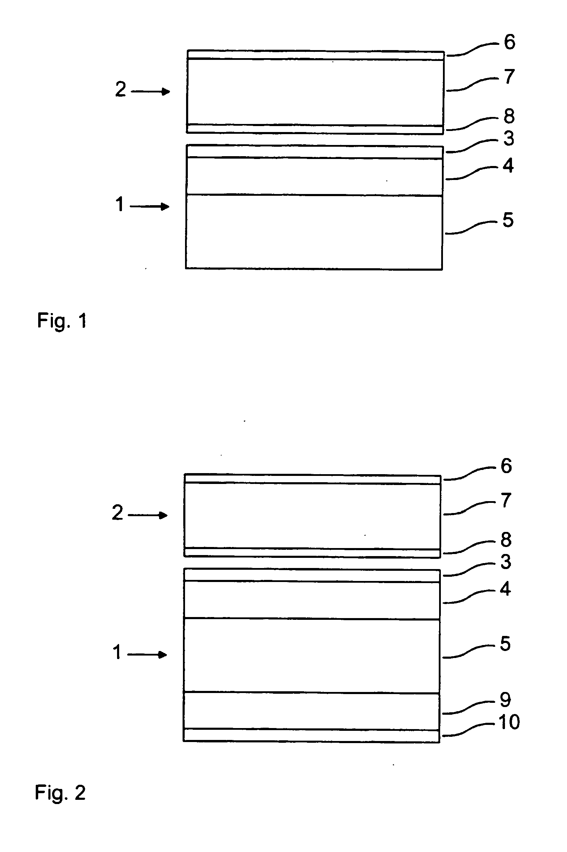

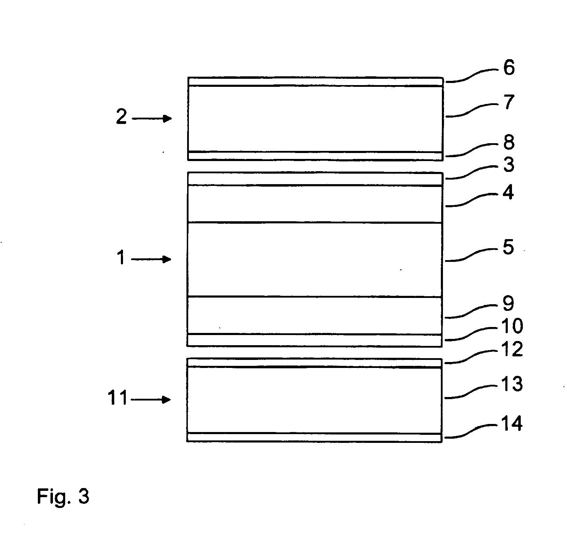

Fig.1 zeigt ein Ausführungsbeispiel für einen Folienstapel zur Herstellung einer Seite eines Passbuches in schematischer Darstellung. Die Darstellung ist nicht maßstabsgetreu. Dies gilt auch für die Fig. 2 und 3. Der Folienstapel weist eine Kernfolie 1 und eine Deckfolie 2 auf. Die Kernfolie 1 ist durch Coextrusion hergestellt und weist drei Schichten 3, 4 und 5 auf. Die Schicht 3, die der Deckfolie 2 benachbart ist, weist gute Laminationseigenschaften, insbesondere eine vergleichsweise niedrige Erweichungstemperatur, auf und besteht aus PETG oder einem ähnlich aufgebauten Co-Polyester. PETG bezeichnet ein amorphes, glykolisiertes Polyethylenterephtalat (PET). Die Schicht 3 ist transparent ausgebildet und gut bedruckbar. Die Schicht 3 kann eine Reihe von Additiven enthalten, beispielsweise ein Release- und/ oder Antiblockmittel und optional ein Laseradditiv zur Beeinflussung der Laserung. Der Anteil der Schicht 3 an der Dicke der Kernfolie 1 beträgt 2,5 % bis 15 %, insbesondere 2,5% bis 10 %. Die Dicke der Kernfolie 1 beträgt 150 µm bis 200 µm, vorzugsweise etwa 160 µm.

Die auf die Schicht 3 folgende Schicht 4 besteht aus Polycarbonat und PETG oder einem ähnlich aufgebauten Co-Polyester. Der Gewichtsanteil des PETG beträgt dabei zwischen 5 % und 50 %. Die Schicht 4 ist transparent und vergleichsweise temperaturstabil ausgebildet. Durch entsprechende Laseradditive ist gewährleistet, dass die Schicht 4 gut für die Laserung geeignet ist. Der Anteil der Schicht 4 an der Dicke der Kernfolie 1 beträgt 10 % bis 30 %. Die Dicke der Schicht 4 wird dabei vorzugsweise so gewählt, dass ein Multiple Laser Image (MLI) optimal wegkippen kann. Bei dem MLI handelt es sich um eine Art Kippbild, dessen optische Erscheinung sich mit dem Betrachtungswinkel ändert.

An die Schicht 4 schließt sich eine Schicht 5 an, die aus PETG oder einem ähnlich aufgebauten Co-Polyester, aus Titanoxid und aus einem Schlagzähmodifier besteht. Der Gewichtsanteil des Titanoxids beträgt 7 % bis 15 %, der Gewichtsanteil des Schlagzähmodifiers 5 % bis 25 %. Der Schlagzähmodifier stammt bevorzugt aus der Gruppe der thermoplastischen Elastomere, der Butadien-Copolymere, z. B. MBS oder ABS, und der Kautschuk-Produkte. Die Schicht 5 verleiht der Kernfolie 1 somit eine gewisse Elastizität und ist opak ausgebildet. Der Anteil der Schicht 5 an der Dicke der Kernfolie 1 beträgt 20 % bis 75 %.

Die Schichten 3, 4 und 5 stehen bezüglich ihrer Dicken vorzugsweise im Verhältnis von etwa 10 zu 30 zu 60 zueinander.

Die Deckfolie 2 ist ebenfalls durch Coextrusion hergestellt und weist drei Schichten 6, 7 und 8 auf, wobei die Schicht 6 auch entfallen kann. Die Schicht 6 ist auf der Außenseite des Folienstapels ausgebildet, weist gute Laminationseigenschaften auf, ist gut bedruckbar und besteht insbesondere aus PETG oder einem ähnlich aufgebauten Co-Polyester. Weiterhin ist die Schicht 6 transparent ausgebildet und weist Release- und/oder Antiblockmittel zur Erleichterung der Verarbeitung bei der Lamination auf. Optional kann auch ein Laseradditiv vorhanden sein. Der Anteil der Schicht 6 an der Dicke der Deckfolie 2 beträgt 2,5 % bis 25 %. Die Dicke der Deckfolie 2 beträgt etwa 100 µm.

Auf die Schicht 6 folgt die Schicht 7, die mechanisch und thermisch sehr stabil ist. Die Schicht 7 besteht aus PETG oder einem ähnlich aufgebauten Co-Polyester und einem kristallinen, teilkristallinen oder mikrokristallinen Polyester und/oder einem Polycarbonat. Der Gewichtsanteil des kristallinen, teilkristallinen oder mikrokristallinen Polyesters und/oder des Polycarbonats an der Schicht 7 beträgt insgesamt 50 % bis 95 %. Vorzugsweise beträgt der Gewichtsanteil 70 %. Die Schicht 7 ist transparent und kann optional Laseradditive aufweisen. Der Anteil der Schicht 7 an der Dicke der Deckfolie 2 beträgt 50 % bis 95 %.

Zur Kernfolie 1 hin schließt sich an die Schicht 7 der Deckfolie 2 die Schicht 8 an, die identisch zur Schicht 6 ausgebildet ist. Die Schicht 8 ist auch dann vorhanden, wenn die Schicht 6 entfällt.

Neben den bereits genannten Substanzen kann die Deckfolie 2 fluoreszierende Additive, phosphoreszierende Additive, Sicherheitsmerkmale, LCPs (Liquid Crystal Pigments) usw. aufweisen. Die Schichten 6, 7 und 8 stehen bezüglich ihrer Dicken vorzugsweise im Verhältnis von etwa 10 zu 80 zu 10 zueinander.

Hinsichtlich der Laseradditive werden die Kernfolie 1 und die Deckfolie 2 vorzugsweise so ausgebildet, dass die Konzentration an Laseradditiven in unmittelbarer Nähe der opaken Schicht 5 der Kernfolie 1 hoch ist und dann nach außen hin abnimmt. Dies bedeutet, dass in der Schicht 5 der Kernfolie 1 keine Laseradditive vorhanden sind, die Konzentration an Laseradditiven 1 in der Schicht 4 der Kernfolie 1 hoch und in der Schicht 3 der Kernfolie 1 bereits deutlich geringer ist. In der Deckfolie 2 liegt eine noch geringere Konzentration an Laseradditiven vor oder es sind keine Laseradditive vorhanden.

Ebenso ist es auch möglich, die Schicht 5 der Kernfolie 1 so auszubilden, dass bei der Laserung auf ihrer freien Oberfläche Auswölbungen entstehen. Hierzu wird die Zusammensetzung der Schicht 5 so gewählt, dass sie eine niedrige Erweichungstemperatur sowie eine nicht allzu hohe Opazität und Restabsorption aufweist. Wird die Erweichungstemperatur höher und die Opazität noch geringer eingestellt, dann lässt sich bei einer ausreichenden Dotierung mit Laseradditiven ein auf der freien Oberfläche der Schicht 5 sichtbarer Verfärbungseffekt erzielen. Hierzu kann auch eine Zusatzschicht an die Schicht 5 angeschlossen werden, die coextrudiert oder laminiert werden kann und über eine geeignete Erweichungstemperatur und Dotierung mit Laseradditiven verfügt.

Zur Herstellung der Seite des Passbuches wird der in Fig.1 dargestellte Folienstapel einer Laminierpresse zugeführt, die insbesondere als Rollenlaminator ausgeführt sein kann. In der Laminierpresse werden die Kernfolie 1 und die Deckfolie 2 unter Einwirkung von Druck und Hitze miteinander verbunden. Die Verbindung wird dabei durch die Schicht 3 der Kernfolie 1 und die Schicht 8 der Deckfolie 2 ausgebildet, die eigens dafür ausgebildet sind. Insbesondere weisen die Schichten 3 und 8 eine etwas niedrigere Erweichungstemperatur als die Schichten 4, 5 und 7 auf, so dass die Schichten 4, 5 und 7 durch die Lamination nur wenig beeinflusst werden. Für bestimmte Anwendungsfälle kann auch die Schicht 5 eine den Schichten 3 und 8 entsprechende niedrigere Erweichungstemperatur aufweisen. Falls die Lamination bogenweise oder kontinuierlich mittels Bahnen erfolgt, werden die Datenträger nach der Lamination aus den laminierten Bögen oder Bahnen ausgestanzt. Die Lamination kann wahlweise vor oder nach der Herstellung des Passbuches erfolgen. Dies bedeutet, dass entweder der Folienstapel oder die laminierte Passbuchseite in das Passbuch eingenäht wird. Dabei besteht auch die Möglichkeit, eine Personalisierung auf einer zusätzlichen Folie durchzuführen, die bei der Lamination mit dem Folienstapel verbunden wird.

Alternativ zu der in Fig. 1 dargestellten unsymmetrischen Kernfolie 1 kann für die Seite des Passbuches auch eine symmetrische Kernfolie 1 eingesetzt werden. Dies ist in Fig. 2 dargestellt.

Fig. 2 zeigt ein weiteres Ausführungsbeispiel für einen Folienstapel zur Herstellung einer Seite eines Passbuches in schematischer Darstellung. Dieses Ausführungsbeispiel unterscheidet sich von dem in Fig. 1 dargestellten Ausführungsbeispiel darin, dass die Kernfolie 1 zwei weitere Schichten 9 und 10 aufweist. Die Schicht 9 ist identisch zur Schicht 4 ausgebildet und schließt sich an die Seite der Schicht 5 an, die nicht durch die Schicht 4 abgedeckt ist. Auf die Schicht 9 folgt die Schicht 10, die identisch zur Schicht 3 ausgebildet ist, so dass sich ein symmetrischer Aufbau der Kernfolie 1 ergibt und dadurch ein Aufwölben der damit hergestellten Passbuchseite vermieden werden kann. Bezüglich der bevorzugten Dicke und der Schichtdickenverteilung der Kernfolie 1 weicht das Ausführungsbeispiel gemäß Fig. 2 von dem in Fig.1 dargestellten Ausführungsbeispiel ab. Die Dicke der Kernfolie 1 beträgt nunmehr vorzugsweise etwa 200 µm, wobei die Schichten 3, 4, 5, 9 und 10 bezüglich ihrer Dicken vorzugsweise im Verhältnis von etwa 5 zu 25 zu 50 zu 25 zu 5 zueinander stehen. Die Dicke und die Schichtdickenverteilung der Deckfolie 2 sind in den Ausführungsbeispielen der Fig. 1 und 2 identisch.

In einer Abwandlung des in Fig. 2 dargestellten Ausführungsbeispiels ist die Kernfolie 1 vierschichtig ausgebildet, d. h. die Schicht 9 oder die Schicht 10 ist nicht vorhanden.

Die Erfindung kann nicht nur bei Passbuchseiten eingesetzt werden, sondern beispielsweise auch bei Kunststoffkarten, insbesondere bei Magnetstreifenkarten und Chipkarten. Ein diesbezügliches Ausführungsbeispiel ist in Fig. 3 dargestellt.

Fig. 3 zeigt ein Ausführungsbeispiel für einen Folienstapel zur Herstellung einer Kunststoffkarte in schematischer Darstellung. Der Aufbau und die Materialien der Kernfolie 1 und der Deckfolie 2 entsprechen dem in Fig. 2 dargestellten Ausführungsbeispiel. Bezüglich der Schichtdickenverteilung und der Dicke der Kernfolie bestehen allerdings Abweichungen zwischen den Ausführungsbeispielen der Fig. 2 und 3. Außerdem ist bei dem in Fig. 3 dargestellten Ausführungsbeispiel zusätzlich eine weitere Deckfolie 11 vorhanden. Die Deckfolie 11 ist identisch zur Deckfolie 2 aufgebaut und weist wenigstens zwei Schichten 12,13 und/oder 14 auf, die im Anschluss an die Schicht 10 der Kernfolie 1 in dieser Reihenfolge aufeinander folgen. Bei der Lamination werden somit die Schichten 3 und 8 sowie die Schichten 10 und 12 miteinander verbunden.

Die Kernfolie 1 weist bei dem in Fig. 3 dargestellten Ausführungsbeispiel eine Dicke von vorzugsweise etwa 300 µm auf, wobei die Schichten 3, 4, 5, 9 und 10 bezüglich ihrer Dicken vorzugsweise im Verhältnis von etwa 5 zu 25 zu 40 zu 25 zu 5 zueinander stehen.

Alternativ zu dem in Fig. 3 dargestellten Ausführungsbeispiel ist es bei Kunststoffkarten beispielsweise auch möglich, eine entsprechend Fig.1 dreischichtig aufgebaute Kernfolie 1 einzusetzen. Die Dicke dieser Kernfolie 1 beträgt dann wiederum etwa 300 µm, wobei die Schichten 3, 4 und 5 bezüglich ihrer Dicken vorzugsweise im Verhältnis von etwa 10 zu 25 zu 65 zueinander stehen. Ebenso ist ein vierschichtiger Aufbau der Kernfolie 1 möglich, bei dem die Schicht 9 oder die Schicht 10 nicht vorhanden ist.

Ein symmetrischer Aufbau der Kernfolie 1 bzw. der Deckfolien 2 oder 11 kann auch dadurch erreicht werden, dass jeweils zwei unsymmetrische und identische Kernfolien 1 bzw. zwei unsymmetrische und identische Deckfolien 2 oder 11 in entgegen gesetzter Schichtfolge aneinander gelegt werden.

Mit Hilfe der Coextrusion können bei sämtlichen Ausführungsbeispielen qualitativ hochwertige Laser-Kippbilder realisiert werden. Hierzu wird eine dünne Coextrusionsschicht erzeugt, die eine hohe Dotierung mit Laseradditiven aufweist. Zur Ausbildung eines Linsenrasters wird eine Folie mit einer Erweichungstemperatur oberhalb der verwendeten Laminationstemperatur eingesetzt, damit das Linsenraster bei der Lamination nicht beschädigt wird.

Weiterhin können durch die Coextrusion Folien hergestellt werden, bei denen eine transparente Mittelschicht beidseits von je einer opaken Außenschicht abgedeckt wird. Eine derartige Folie kann beispielsweise zur Lichtleitung eingesetzt werden. Dabei kann die transparente Mittellage mit Fluoreszenzstoffen oder Substanzen definierter Lichtstreuung oder Lichtabsorption dotiert sein. Ebenso ist es möglich, eine aktive Lichtführung durch eine Kombination mehrerer transparenter Mittelschichten mit unterschiedlichem Brechungsindex zu erreichen. Das Licht kann beispielsweise durch eine Flächenbeleuchtung eingekoppelt und an den Kanten wieder ausgekoppelt werden. Ebenso ist es auch möglich, mit einer speziellen Anregungsstrahlung eine seitliche Einkoppelung durchzuführen.

Zum Einbringen eines Zusatzelements, beispielsweise eines Hologramms oder einer optischen Aufzeichnungsschicht, wird dieses vorzugsweise auf einer Folie mit einer hohen Erweichungstemperatur angeordnet, die bei der Lamination mit einer Folie niedriger Erweichungstemperatur verbunden wird. Dadurch ist eine sehr schonende Einbettung des Zusatzelements ohne nennenswerte Verformung möglich.

Die anhand der einzelnen Ausführungsbeispiele beschriebenen Merkmale können in vielen Fällen auch bei den jeweils anderen Ausführungsbeispielen vorgesehen werden. Dabei sind ggf. Anpassungen an Besonderheiten der jeweiligen Ausführungsbeispiele erforderlich.

Zur Herstellung von Datenträgern mit einer größeren Dicke können eine oder mehrere der Kern- oder Deckfolien auch doppelt ausgeführt sein.

## Patentansprüche

1. Mehrlagig ausgebildeter tragbarer Datenträger mit einer Kernfolie (1) und wenigstens einer mit der Kernfolie (1) durch Lamination verbundenen Deckfolie (2, 11), wobei die Deckfolie (2,11) wenigstens zum Teil aus einem Co-Polyester und/ oder einem kristallinen, teilkristallinen oder mikrokristallinen Polyester und/ oder einem Polycarbonat besteht, wobei, die Kernfolie (1) wenigstens drei jeweils im Hinblick auf ihre Dicke und/ oder ihre Materialzusammensetzung unterschiedlich ausgebildete coextrudierte Schichten (3, 4, 5) aufweist **dadurch gekennzeichnet, dass** die erste Schicht (3) der Kernfolie (1) eine Erweichungstemperatur unterhalb der Laminationstemperatur aufweist, wobei diese erste Schicht (3) der Kernfolie (1) auf Basis eines Co-Polyesters ausgebildet ist.

2. Datenträger nach einem der vorhergehenden Ansprüche, **dadurch gekennzeichnet, dass** der Anteil der ersten Schicht (3) an der Dicke der Kernfolie (1) 2,5 % bis 15 %, vorzugsweise 2,5 % bis 10 % beträgt.

3. Datenträger nach einem der vorhergehenden Ansprüche, **dadurch gekennzeichnet, dass** der Anteil der zweiten Schicht (4) an der Dicke der Kernfolie (1) 10 % bis 30 % beträgt.

4. Datenträger nach einem der vorhergehenden Ansprüche, **dadurch gekennzeichnet, dass** die zweite Schicht (4) der Kernfolie (1) auf Basis eines Polycarbonats und/ oder eines Co-Polyesters ausgebildet ist.

5. Datenträger nach Anspruch 4, **dadurch gekennzeichnet, dass** der Gewichtsanteil des Co-Polyesters an der zweiten Schicht (4) der Kernfolie (1) 5 % bis 50 % beträgt.

6. Datenträger nach einem der vorhergehenden Ansprüche, **dadurch gekennzeichnet, dass** der Anteil der dritten Schicht (5) an der Dicke der Kernfolie (1) 20 % bis 75 % beträgt.

7. Datenträger nach einem der vorhergehenden Ansprüche, **dadurch gekennzeichnet, dass** die dritte Schicht (3) der Kernfolie (1) auf Basis eines Co-Polyesters ausgebildet ist.

8. Datenträger nach einem der vorhergehenden Ansprüche, **dadurch gekennzeichnet, dass** die dritte Schicht (5) der Kernfolie (1) einen Schlagzähmodifier, insbesondere mit einem Gewichtsanteil von 5 % bis 25 %, aufweist.

9. Datenträger nach einem der vorhergehenden Ansprüche, **dadurch gekennzeichnet, dass** die dritte Schicht (5) der Kernfolie (1) Titanoxid, insbesondere mit einem Gewichtsanteil von 7 % bis 15 %, aufweist.

10. Datenträger nach einem der vorhergehenden Ansprüche, **dadurch gekennzeichnet, dass** die erste Schicht (3) und die zweite Schicht (4) der Kernfolie (1) transparent sind und die dritte Schicht (5) der Kernfolie (1) opak ist.

11. Datenträger nach einem der vorhergehenden Ansprüche, **dadurch gekennzeichnet, dass** die Kernfolie (1) eine vierte Schicht (9) und/oder eine fünfte Schicht (10) aufweist, wobei die vierte Schicht (9) entsprechend der zweiten Schicht (4) und die fünfte Schicht (10) entsprechend der ersten Schicht (3) ausgebildet sind.

12. Datenträger nach einem der vorhergehenden Ansprüche, **dadurch gekennzeichnet, dass** er als eine Seite eines Passbuches ausgebildet ist.

13. Datenträger nach Anspruch 12, **dadurch gekennzeichnet, dass** die Dicke der Kernfolie (1) 150 µm bis 200 µm beträgt.

14. Datenträger nach einem der Ansprüche 1 bis 11, **dadurch gekennzeichnet, dass** er als eine Kunststoffkarte, insbesondere als eine Magnetstreifenkarte oder eine Chipkarte, ausgebildet ist.

15. Datenträger nach Anspruch 14, **dadurch gekennzeichnet, dass** die Dicke der Kernfolie (1) etwa 300 µm beträgt.

16. Datenträger nach einem der vorhergehenden Ansprüche, **dadurch gekennzeichnet, dass** die Deckfolie (2, 11) wenigstens zwei coextrudierte Schichten (7, 8, 12, 13) aufweist.

17. Datenträger nach Anspruch 16, **dadurch gekennzeichnet, dass** der Anteil der ersten Schicht (8, 12) an der Dicke der Deckfolie (2, 11) 2,5 % bis 25 % beträgt.

18. Datenträger nach einem der Ansprüche 16 oder 17, **dadurch gekennzeichnet, dass** die erste Schicht (8,12) der Deckfolie (2,11) auf Basis eines Co-Polyesters ausgebildet ist.

19. Datenträger nach einem der Ansprüche 14 bis 16, **dadurch gekennzeichnet, dass** der Anteil der zweiten Schicht (7,13) an der Dicke der Deckfolie (2,11) 50 % bis 95 % beträgt.

20. Datenträger nach einem der Ansprüche 16 bis 19, **dadurch gekennzeichnet, dass** die zweite Schicht (7,13) der Deckfolie (2, 11) auf Basis eines Co-Polyesters und eines kristallinen, teilkristallinen oder mikrokristallinen Polyesters und/ oder eines Polycarbonats ausgebildet ist.

21. Datenträger nach Anspruch 20, **dadurch gekennzeichnet, dass** der Gewichtsanteil des kristallinen, teilkristallinen oder mikrokristallinen Polyesters und/oder des Polycarbonats an der zweiten Schicht (7,13) der Deckfolie (2, 11) insgesamt 50 % bis 95 %, vorzugsweise 70 % beträgt.

22. Datenträger nach einem der Ansprüche 16 bis 21, **dadurch gekennzeichnet, dass** die Deckfolie (2, 11) eine dritte Schicht (6,14) aufweist, die entsprechend der ersten Schicht (8, 12) ausgebildet ist und die zweite Schicht (7,13) zwischen der ersten Schicht (8,12) und der dritten Schicht (6, 14) angeordnet ist.

23. Datenträger nach einem der vorhergehenden Ansprüche, **dadurch**
**gekennzeichnet, dass** die Dicke der Deckfolie (2, 11) etwa 100 µm beträgt.

24. Datenträger nach einem der vorhergehenden Ansprüche, **dadurch gekennzeichnet, dass** es sich bei dem Co-Polyester um ein amorphes, glykolisiertes Polyethylenterephtalat handelt.

## Claims

1. A portable data carrier of a multilayer configuration having a core foil (1) and at least one cover foil (2, 11) connected to the core foil (1) by lamination, whereby the cover foil (2, 11) consists at least partly of a copolyester and/or a crystalline, partly crystalline or microcrystalline polyester and/or a polycarbonate, whereby the core foil (1) has at least three coextruded layers (3, 4, 5) that are respectively configured differently with regard to their thickness and/or their material composition, **characterized in that** the first layer (3) of the core foil (1) has a softening temperature below the lamination temperature, whereby said first layer (3) of the core foil (1) is configured on the basis of a copolyester.

2. The data carrier according to any of the preceding claims, **characterized in that** the proportion of the first layer (3) of the thickness of the core foil (1) amounts to 2.5% to 15%, preferably 2.5% to 10%.

3. The data carrier according to any of the preceding claims, **characterized in that** the proportion of the second layer (4) of the thickness of the core foil (1) amounts to 10% to 30%.

4. The data carrier according to any of the preceding claims, **characterized in that** the second layer (4) of the core foil (1) is configured on the basis of a polycarbonate and/or of a copolyester.

5. The data carrier according to claim 4, **characterized in that** the weight proportion of the copolyester of the second layer (4) of the core foil (1) amounts to 5% to 50%.

6. The data carrier according to any of the preceding claims, **characterized in that** the proportion of the third layer (5) of the thickness of the core foil (1) amounts to 20% to 75%.

7. The data carrier according to any of the preceding claims, **characterized in that** the third layer (3) of the core foil (1) is configured on the basis of a copolyester.

8. The data carrier according to any of the preceding claims, **characterized in that** the third layer (5) of the core foil (1) has an impact-strength modifier, in particular with a weight proportion of 5% to 25%.

9. The data carrier according to any of the preceding claims, **characterized in that** the third layer (5) of the core foil (1) has titanium dioxide, in particular with a weight proportion of 7% to 15%.

10. The data carrier according to any of the preceding claims, **characterized in that** the first layer (3) and the second layer (4) of the core foil (1) are transparent and the third layer (5) of the core foil (1) is opaque.

11. The data carrier according to any of the preceding claims, **characterized in that** the core foil (1) has a fourth layer (9) and/or a fifth layer (10), whereby the fourth layer (9) is configured in accordance with the second layer (4), and the fifth layer (10) in accordance with the first layer (3).

12. The portable data carrier according to any of the preceding claims, **characterized in that** it is configured as a page of a passport booklet.

13. The data carrier according to claim 12, **characterized in that** the thickness of the core layer (1) amounts to 150 µm to 200 µm.

14. The data carrier according to any of the claims 1 to 11, **characterized in that** it is configured as a plastic card, in particular as a magnetic stripe card or a chip card.

15. The data carrier according to claim 14, **characterized in that** the thickness of the core foil (1) amounts to approximately 300 µm.

16. The data carrier according to any of the preceding claims, **characterized in that** the cover foil (2, 11) has at least two coextruded layers (7, 8, 12, 13).

17. The data carrier according to claim 16, **characterized in that** the proportion of the first layer (8, 12) of the thickness of the cover foil (2, 11) amounts to 2.5% to 25%.

18. The data carrier according to any of the claims 16 or 17, **characterized in that** the first layer (8, 12) of the cover foil (2, 11) is configured on the basis of a copolyester.

19. The data carrier according to any of the claims 14 to 16, **characterized in that** the proportion of the second layer (7, 13) of the thickness of the cover foil (2, 11) amounts to 50% to 95%.

20. The data carrier according to any of the claims 16 to 19, **characterized in that** the second layer (7, 13) of the cover foil (2, 11) is configured on the basis of a copolyester and of a crystalline, partly crystalline or microcrystalline polyester and/or of a polycarbonate.

21. The data carrier according to claim 20, **characterized in that** the weight proportion of the crystalline, partly crystalline or microcrystalline polyester and/or of the polycarbonate of the second layer (7, 13) of the cover foil (2, 11) amounts to a total of 50% to 95%, preferably 70%.

22. The data carrier according to any of the claims 16 to 21, **characterized in that** the cover foil (2, 11) has a third layer (6, 14), which is configured in accordance with the first layer (8, 12), and the second layer (7, 13) is arranged between the first layer (8, 12) and the third layer (6, 14).

23. The data carrier according to any of the preceding claims, **characterized in that** the thickness of the cover foil (2, 11) amounts to approximately 100 µm.

24. The data carrier according to any of the preceding claims, **characterized in that** the copolyester is an amorphous, glycolized polyethylene terephthalate.

## Revendications

1. Support de données portable multicouche comportant un film formant noyau (1) et au moins un film de recouvrement (2,11) joint par lamination au film formant noyau (1), le film de recouvrement (2,11) consistant au moins partiellement en un copolyester et/ou en un polyester cristallin, partiellement cristallin ou microcristallin et/ou en un polycarbonate, le film formant noyau (1) comportant au moins trois couches (3, 4, 5) coextrudées réalisées respectivement différemment quant à leur épaisseur et/ou aux matériaux les composant, **caractérisé en ce que** la première couche (3) du film formant noyau (1) présente une température de ramollissement inférieure à la température de lamination, cette première couche (3) du film formant noyau (1) étant réalisée sur la base d'un copolyester

2. Support de données selon une des revendications précédentes, **caractérisé en ce que** la part de la première couche (3) dans l'épaisseur du film formant noyau (1) est de 2,5 % à 15 %, de préférence de 2,5 % à 10 %.

3. Support de données selon une des revendications précédentes, **caractérisé en ce que** la part de la deuxième couche (4) dans l'épaisseur du film formant noyau (1) est de 10 % à 30 %.

4. Support de données selon une des revendications précédentes, **caractérisé en ce que** la deuxième couche (4) du film formant noyau (1) est réalisée sur la base d'un polycarbonate et/ou d'un copolyester.

5. Support de données selon la revendication 4, **caractérisé en ce que** la part du poids du copolyester dans la deuxième couche (4) du film formant noyau (1) est de 5 % à 50 %.

6. Support de données selon une des revendications précédentes, **caractérisé en ce que** la part de la troisième couche (5) dans l'épaisseur du film formant noyau (1) est de 20 % à 75 %.

7. Support de données selon une des revendications précédentes, **caractérisé en ce que** la troisième couche (3) du film formant noyau (1) est réalisée sur la base d'un copolyester.

8. Support de données selon une des revendications précédentes, **caractérisé en ce que** la troisième couche (5) du film formant noyau (1) comporte un modificateur de la résistance au choc, notamment dont la part de poids est de 5 % à 25 %.

9. Support de données selon une des revendications précédentes, **caractérisé en ce que** la troisième couche (5) du film formant noyau (1) comporte de l'oxyde de titane, notamment dont la part de poids est de 7 % à 15 %.

10. Support de données selon une des revendications précédentes, **caractérisé en ce que** la première couche (3) et la deuxième couche (4) du film formant noyau (1) sont transparentes et la troisième couche (5) du film formant noyau (1) est opaque.

11. Support de données selon une des revendications précédentes, **caractérisé en ce que** le film formant noyau (1) comporte une quatrième couche (9) et/ou un cinquième couche (10), la quatrième couche (9) étant réalisée de manière correspondante à la deuxième couche (4) et la cinquième couche (10) étant réalisée de manière correspondante à la première couche (3).

12. Support de données selon une des revendications précédentes, **caractérisé en ce qu'**il est réalisé en tant qu'une page d'un passeport.

13. Support de données selon la revendication 12, **caractérisé en ce que** l'épaisseur du film formant noyau (1) est de 150 µm à 200 µm.

14. Support de données selon une des revendications de 1 à 11, **caractérisé en ce qu'**il est réalisé en tant qu'une carte en matière plastique, notamment en tant qu'une carte à bande magnétique ou une carte à puce.

15. Support de données selon la revendication 14, **caractérisé en ce que** l'épaisseur du film formant noyau (1) est d'environ 300 µm.

16. Support de données selon une des revendications précédentes, **caractérisé en ce que** le film de recouvrement (2,11) comporte au moins deux couches coextrudées (7, 8, 12, 13).

17. Support de données selon la revendication 16, **caractérisé en ce que** la part de la première couche (8, 12) dans l'épaisseur du film de recouvrement (2,11) est de 2,5 % à 25 %.

18. Support de données selon une des revendications 16 ou 17, **caractérisé en ce que** la première couche (8, 12) du film de recouvrement (2, 11) est réalisée sur la base d'un copolyester.

19. Support de données selon une des revendications de 14 à 16, **caractérisé en ce que** la part de la deuxième couche (7, 13) dans l'épaisseur du film de recouvrement (2,11) est de 50 % à 95 %.

20. Support de données selon une des revendications de 16 à 19, **caractérisé en ce que** la deuxième couche (7, 13) du film de recouvrement (2,11) est réalisée sur la base d'un copolyester et d'un polyester cristallin, partiellement cristallin ou microcristallin et/ou d'un polycarbonate.

21. Support de données selon la revendication 20, **caractérisé en ce que** la part de poids du polyester cristallin, partiellement cristallin ou microcristallin et/ou du polycarbonate dans la deuxième couche (7, 13) du film de recouvrement (2,11) est au total de 50 % à 95 %, de préférence de 70%.

22. Support de données selon une des revendications de 16 à 21, **caractérisé en ce que** le film de recouvrement (2,11) comporte une troisième couche (6, 14) qui est réalisée de manière correspondante à la première couche (8, 12) et la deuxième couche (7, 13) est agencée entre la première couche (8, 12) et la troisième couche (6, 14).

23. Support de données selon une des revendications précédentes, **caractérisé en ce que** l'épaisseur du film de recouvrement (2,11) est d'environ 100 µm.

24. Support de données selon une des revendications précédentes, **caractérisé en ce que** le copolyester consiste en un amorphe polytéréphtalate d'éthylène glycol amorphe.
